# EUROPEAN PATENT SPECIFICATION

(11) **EP 0 586 710 B1**
(45) Date of publication and mention of the grant of the patent: **06.08.1997**
(21) Application number: 93906786.4
(22) Date of filing: 17.03.1993
(51) Int. Cl.: C04B 35/26, C04B 35/64, H01F 7/02, H01F 41/02, H02K 15/03

(54) **RADIAL ANISOTROPIC CYLINDER TYPE FERRITE MAGNETS AND THEIR MANUFACTURING METHODS AND MOTORS**
RADIAL ANISOTROPISCHE, ZYLINDRISCHE MAGNETE VOM FERRITE-TYP, DEREN HERSTELLUNGSMETHODEN UND MOTOREN
AIMANTS EN FERRITE CYLINDRIQUE A ANISOTROPIE RADIALE, PROCEDES DE FABRICATION ET MOTEURS LES UTILISANT

(30) Priority: 18.03.1992 JP 93688/92; 03.09.1992 JP 262960/92
(43) Date of publication of application: 16.03.1994
(73) Proprietor: SUMITOMO SPECIAL METALS COMPANY LIMITED, Osaka-shi, Osaka 541 (JP)
(72) Inventor: SAKAGUCHI, Takehisa, Sagamihara-shi, Kanagawa 229 (JP); SUNAGA, Takahiro, Machida-shi, Tokyo 194 (JP); HOSHIJIMA, Jun, Amagasaki-shi, Hyougo 661 (JP)
(74) Representative: Livsey, Gilbert Charlesworth Norris
(86) International application number: PCT/JP93/00319
(87) International publication number: WO 93/19020

(56) References cited:
- EP-A- 0 472 191
- FR-A- 2 075 542
- FR-A- 2 245 060
- PATENT ABSTRACTS OF JAPAN vol. 10, no. 164 (E-410)11 June 1990
- PROCEEDINGS OF THE INTERNATIONAL CONFERENCE ON FERRITES TOKYO, SEPT-OCTO 1980 pages 341 - 344 KAJIRO SATO & YOSHIKAZU NAKAMURA 'microstrutural fracture anisotropy and fracture of oriented Bao.6Fe2O3 permanent magnets'

## Description

This invention relates to radial anisotropic cylinder type ferrite magnets and to methods for their manufacture and to motors incorporating such magnets.

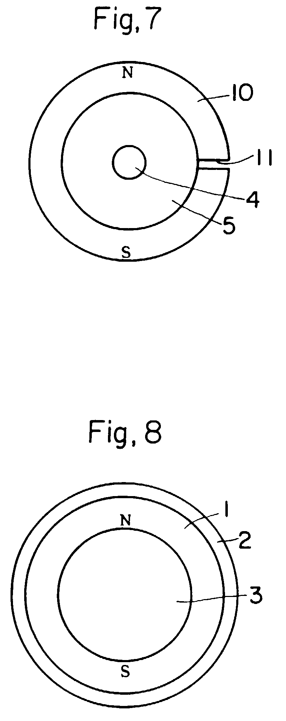

As the usual compositions of motors in which ferrite magnets are employed as stators and rotors, the compositions such as Fig. 8, Fig. 9 and Fig. 10 are known.

That is to say, the composition in Fig. 8 is an example of a stator utilizing the cylindrical ferrite magnet 1. The magnet is fastened to the inner circumference of the cylindrical yoke 2, and a rotor (not shown here) is placed in space 3 in the inner circumference side of the said magnet. Usually, for a motor with such composition the usage of the strong magnetic radial anisotropic ferrite magnet is difficult for the reasons explained later, and the isotropic cylinder type ferrite magnet 1 is utilized, as a relatively low output motor.

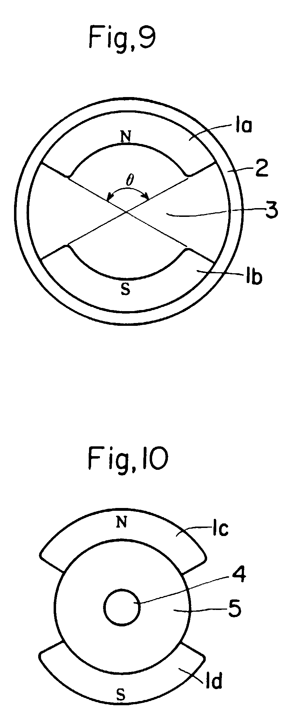

The composition shown in Fig. 9 is an example of which a pair of segment magnets, 1a, and ab are used on the stator side. Each magnet is fastened to the inner circumference of the yoke 2, and a rotor (not shown) is positioned in the space 3 where the said magnetic poles are opposed. But there are other motors which use multiple segmental magnets, with accordingly a number of magnetic poles. With such segmental magnets, since it is possible to use strong magnetic radial anisotropic ferrite magnets, these are used in relatively high output motors.

The composition shown in Fig. 10 is an example in which a pair of segment magnets 1c and 1d are used on the rotor side. Each magnet is fastened to the outer circumference of the magnet support 5 and positioned within a stator (not shown) of the specified shape to configure a motor. Segment magnets 1c and 1d as in ferrite magnets shown in Fig. 9, since it can utilize strong magnetic radial anisotropic ferrite magnets, it is used for relatively high output motors.

However, recently, even for the high output motors, from the point of view of simplified assembly (making the assembly operation more efficient) and preventing cogging, the motor composition has been sought which employs radial anisotropic cylinder type ferrite magnets which have equivalent or better magnetic properties than the above stated radial anisotropic ferrite magnets.

One method of manufacturing such radial anisotropic cylinder type ferrite magnets, comprises selecting raw material powder such as Sr ferrite pulverized powder and Ba ferrite pulverized powder with an average particle size of less than 2 micro meter and molding such powders into a cylindrical form using the dry method under a magnetic field and sintering the powder. On sintering, the shrinkage factors for the circumferential and radial direction differ and as a result, internal stress accumulates to cause cracking, hindering a fully satisfactory implementation of this method.

To prevent cracking in the sintering process, it has been proposed to use the mixture of 50 ∼ 80 wt% Sr ferrite pulverized powder with an average particle size less than 2 micro meter and 50 ∼ 20 wt% Ba ferrite isotropic granulated powder with the particle size of 14 ∼ 200 mesh in the presence of a magnetic field and to mold it using the dry method (Patent Bulletin Heisei 1-48643).

However, the magnetic characteristics of radial anisotropic cylinder shape ferrite magnets industrially sintered utilizing this method had the upper limits of Br = 3.4kG, BH_{C} = 2.9kG, and (BH)max = 2.6MGOe, and these were not enough to satisfy the recent demand of high performance.

That is to say, it has been difficult to achieve radial anisotropic cylinder shape ferrite magnets with those strong magnetic properties, which are indispensable for realization of the sought after high power output motors.

For example, single body high performance radial anisotropic cylinder shape ferrite magnets consisting of Sr ferrite were hard to manufacture, so that segment magnets which are generally less susceptible to cracking were manufactured from said compositions, and as shown in Fig. 9, a pair were positioned at opposing ends, or these magnets were assembled into a cylinder shape.

Therefore, the utilization of multiple segment magnets not only complicated the assembly processes, but as shown in Fig. 9 when a pair were positioned at opposing ends, a large space is created between magnets in the circumferential direction. Also, when magnets were assembled in a cylindrical shape, many patches (connecting parts) were unavoidably made in the circumferential directions; thus, creating the problem of cogging in motors.

Particularly, when these motors were used as wiper motors and fan motors, etc., noise associated with cogging was generated; and it was necessary to consider the environmental impact for those who work close to said motors.

However, while the above stated method prevents complex cracking, in order to make repair by adhesives easy, for example, to obtain the above stated segment magnets, it is necessary to make cuts at predetermined places by focussing the internal stress. Therefore, this is not a good method to obtain a uniform cylindrical shape ferrite magnet, and it does not solve problems of segment magnets and their assembly.

This invention concerns the provision of the high performance radial anisotropic cylinder shape ferrite magnets, and the objective is to be able to utilize a powder composition that has strong magnetic properties; and to provide a high performance radial anisotropic ferrite magnet in one uniform body without having to assemble segment magnets. Also, this invention reduces the problems mentioned above, it aims to provide motors that can make the assembly more efficient, with lower noise and with miniaturization being possible.

According to this invention there is provided a radial anisotropic magnet having a ferrite composition which includes Sr and/or Ba characterized in that it has a final shape which is near-cylindrical, being a hollow cylinder whose wall is interrupted by a narrow slit which is closed or nearly closed but which yet extends open in one or both of the radial and axial directions, this near-cylinder being derived from a C-shaped powder molding which is molded and sintered, the resultant sintered C-shaped body then being re-formed into a near cylinder with the mouth of the C being partially closed to form the narrow slit.

This invention concerns any ferrite magnet, as long as it has a ferrite composition which includes Sr or Ba, and regardless of its magnetic properties, and a method of manufacturing such a magnet also forms an aspect of the invention.

Such a method preferably employs a method of making a radial anisotropic magnet as defined in claim 1 and having a ferrite composition which includes Sr and/or Ba and which has a final shape which is near-cylindrical, being a hollow cylinder whose wall is interrupted by a narrow slit which is closed or nearly closed but which yet extends open in one or both of the radial and axial directions, characterized in that the constitutent powders for forming the magnet are placed in a C-shaped mould, and sintered, the resultant sintered C-shaped body then being re-formed into a near cylinder with the mouth of the C being partially closed to form the said narrow slit.

The sintering conditions chosen for forming the magnet are also selected according to the above stated ferrite composition or the molding dimensions. In order that the internal stress due to the difference of shrinkage rate of circumferencial and radial direction in sintering can easily released through a slit made on the molding, the sintering condition and the shape of a jig must be carefully designed to accomplish it.

The aim of molding in a C-shape is to prevent the generation of internal stress which is liable to occur when sintering a cylinder shaped powder molding consisting of Sr and/or Ba ferrite. By making the shape of the molding into the letter C, the space in which to alleviate the internal stress due to differences in shrinkage rate of circumferential and radial direction is installed by a slit to release the stress. Thus, even using a raw material which has strong magnetic properties, cracking will not result in sintering, high performance magnets with radial anisotropic cylinder shape can be easily obtained; and a high performance motor can be made by effectively positioning the said high performance radial anisotropic cylinder shape ferrite magnets.

### Brief Description of Drawings

Fig. 1 is a stator plan of an example of motor.

Fig. 2 is a partially expanded plan of a slit in a radial anisotropic cylinder shape ferrite magnet.

Fig. 3 is a partially expanded plan of a slit in a radial anisotropic cylinder shape ferrite magnet.

Fig. 4 is a partially expanded plan of a slit in a radial anisotropic cylinder shape ferrite magnet.

Fig. 5 is a partially expanded plan which shows the connection of magnet and yoke to be used as a stator.

Fig. 6 is a plan which shows the composition to illustrate the mechanical strength of magnet which comprises stator in this invented motor.

Fig. 7 is an another example plan of this invention, which shows only the rotor composition of the motor.

Fig. 8 is a plan which shows a part of stator of motor using the usual ferrite magnets.

Fig. 9 is a plan which shows a part of stator of motor using the usual ferrite magnets.

Fig. 10 is a plan which shows a part of a rotor of the motor composition using the ferrite magnet.

### Best Mode for Carrying Out the Invention

### Example 1

Using 100% pulverized powder of Sr ferrite with the average particle size of less than 2 micro meter, in order to manufacture a cylinder shaped ferrite magnet with the dimension of 50mm (outer radius) x 40mm (inner radius) x 20mm (thickness), two groups of moldings with the identical dimension were made. One group was sintered as usual, while a circumferential section from the other molding group was eliminated to make a cross sectional letter C and sintered using the invented manufacturing method. Two types of the radial anisotropic cylinder shape ferrite magnets were manufactured.

Magnets obtained from the same molding condition (molding pressure 1 ton/cm²) and the sintering condition (1200°C x 1 hour) both had the magnetic characteristics of Br = 3.8kG, BHc = 3.05kG, and (BH)max 3.3MGOe.

As far as the rate of cracking, while the usual method produced cracking in all, this invented method produced none.

### Example 2

Using 100% pulverized powder of Ba ferrite with the average particle size of less than 2 micro meter, in order to manufacture a cylinder shaped ferrite magnet with the dimension of 65mm (outer radius) X 50mm (inner radius) X 25mm (thickness), two groups of moldings with the identical dimension were made. As in Example 1, one group was sintered as usual, while the other group utilized the invented manufacturing method to obtain two types of the radial anisotropic cylinder shape ferrite magnets.

Magnets obtained from the same molding condition (molding pressure 1 ton/cm²) and the sintering condition (1200°C x 1 hour) both had the magnetic characteristics of Br = 3.6kG, BH_{C} = 2.0kG, and (BH)max 2.7MGOe.

As far as the rate of cracking, while the usual method produced cracking in all, this invented method produced none.

### Example 3

Using the mixture of 50 ∼ 80wt%, pulverized powder of Sr ferrite with the average particle size of less than 2 micro meter and 50 ∼ 20 wt% granulated Ba ferrite 14 ∼ 200 meshes, in order to 40mm (outer radius) x 32mm (inner radius) x 1 Smm (thickness), two groups of moldings with the identical dimensions were made. As in Example 1, one group was sintered as usual, while the other group utilized the invented manufacturing method to obtain two types of the radial anisotropic cylinder shape ferrite magnets.

Magnets obtained from the same molding condition (molding pressure 1 ton/cm²) and the sintering condition 1200°C x 1 hour) both had the magnetic characteristics of Br = 3.6kG, BH_{C} = 2.95kG, and (BH)max 2.75MGOe.

As far as the rate of cracking, while this invented method produced none, the usual method produced cracking in all magnets.

### Example 4

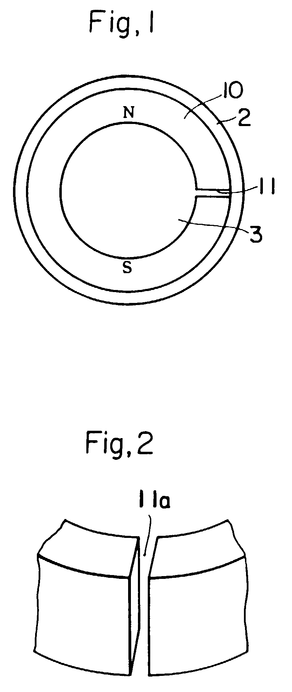

In Fig. 1, 10 denotes a ferrite magnet containing Sr which is made from the above manufacturing method, and except at a slit 11 it is a uniform radial anisotropic cylinder shape ferrite magnet. Here, the out of roundness process is administered after sintering, the magnet is pressure fastened to the inner circumference 2 of the cylinder shape yoke to comprise a stator. Furthermore, by positioning a rotor (not shown) in space 3 of the inner circumference of the said ferrite magnet 10, the object motor is obtained.

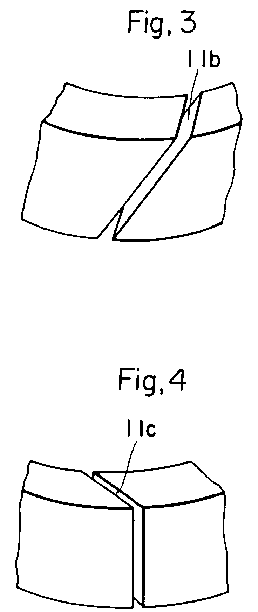

The slit 11 which is formed on the radial anisotropic cylinder shape ferrite magnet 10, as shown in Fig. 2 is not limited to a slit 11 a composition which is parallel to the radial or axial directions, but as shown in Fig. 3, a slit 11b composition (the magnet thickness gradually changes in the axial direction) can be oblique to the axial direction, or as shown in Fig. 4, a slit 11c composition (the magnet thickness gradually changes in the radial direction) which is oblique to the radial direction is possible.

Particularly, in the compositions of Fig. 3 and Fig. 4, it can moderate the magnetic disturbance from the existence of slit. In the composition of Fig. 3, since the mechanical strength improves against the axial force, when the said radial anisotropic cylinder shape ferrite magnet is pressure fastened to the inner circumference of the cylinder shape yoke 2, it can prevent damage.

In Fig. 1 to Fig. 4 the slits were shown magnified, and whether or not the slits are partially or completely closed the same effect can be obtained.

### Example 5

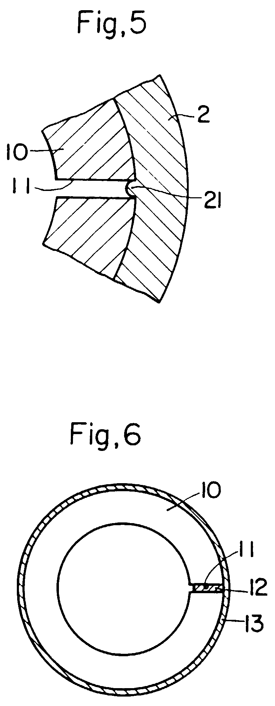

Fig. 5 shows the same when a slit is not closed and how effectively it is used. If a protrusion 21 to determine the magnet position is made in the inner circumference of the cylinder shape yoke 2, it is possible to align a slit 11 to the protrusion 21, which results in improving assembly accuracy of the radial anisotropic cylinder shaped ferrite magnet 10 and the cylinder shaped yoke 2. If further improvements in accuracy of positioning are required other constituent elements can be included (not shown) which are positioned using the cylinder shaped yoke 2 as the reference and the radial anisotropic cylinder shape ferrite magnet 10, and which will also decrease the torque disturbance generation of motors.

Also, when magnetizing the radial anisotropic cylinder shaped ferrite magnet 10 by itself before pressure fastened to the cylinder shaped yoke 2, or magnetizing it after it is pressure fastened to the cylinder shape yoke 2, as in the case of the protrusion 21 which is to help determine the position of the magnet, by making a protrusion to determine the magnet position in the magnetizer (not shown) and aligning it with the slit 11, it is possible to increase accuracy in the magnetic polar positioning.

Furthermore, the protrusion 21 formed on the inner circumference of the above mentioned cylinder shape yoke 2, which is to determine the position of magnet, can also prevent the circumferential movement after the radial anisotropic cylinder shaped ferrite magnet 10 is fastened by pressure of adhesives to the cylinder shaped yoke 2.

When concerned about the mechanical strength of the radial anisotropic cylinder type ferrite magnet 10 due to the presence of a slit 11, after sintering, adhesives and other resins can be filled into the said slit 11 and hardened; or as shown in Fig. 6,a magnetic thin plate 12 with a specified thickness can be inserted; furthermore, the outer circumference of the magnet 10 is surrounded by a magnetic thin plate 13. It is possible to make handling of the radial anisotropic cylinder shape ferrite magnet easy by utilizing such compositions.

In any of the above compositions, even not applying special shapes such as in Fig. 3 and Fig. 4 to the slit 11 formed on the radial anisotropic cylinder shape magnet 10, if it is placed at the neutral position of the magnetic field made by the said magnet 10 and give consideration to the resultant magnetic pole positions, the magnetic disturbance due to the slit 11 will not occur and does not interfere with the motor characteristics.

### Example 6

Fig. 7 shows other example of this invention, particularly, it only displays the rotor composition of the motor. That is to say in Fig. 7, the magnet 10 consists of the ferrite composition with Sr which is manufactured according to the above method, and except at a slit 11 at the radial and axial directions, it is a uniform radial anisotropic cylinder shape ferrite magnet. Here, the out of roundness process is applied after sintering, and fastened to the outer circumference of the magnet support 5 to which a rotor axis 4 is fastened in the center. They are positioned inside a stator (not shown) to comprise a motor.

In this composition, too, for the radial anisotropic cylinder shape ferrite magnet 10, the same technology used for the above stator composition can be utilized.

Especially, a protrusion (not shown) to determine the magnet position is formed on the outer circumference of the magnet support 5, by fastening the slit 11 along the protrusion, the circumferential fastening strength of the radial anisotropic cylinder shaped ferrite magnet 10 is improved and prevents the movement in the rotor revolution.

### Example 7

The sintered body obtained in Example 1 was further processed by the out-of-roundness method to attain the desired dimension, and pressure fastening it to the cylinder shape yoke to obtain the invented motor shown in Fig. 1.

Positioning the radial anisotropic segment ferrite magnet which is equivalent in the magnetic properties as in the above stated radial anisotropic cylinder shape ferrite magnet, and the dimension such as the outside diameter, inside diameter, and the height with the angle θ 135° as shown in Fig. 9 the usual motor was made and compared. This invented motor, in comparison with the conventional motor, reduced the cogging noise by about 50 - 60%, and the increase total magnetic flux resulted in the improvement of 15 - 20% torque revolution.

### Example 8

The sintered body obtained in Example 2 was further processed by the out-of-roundness method to attain the desired dimension, and pressure fastening it to the cylinder shape yoke to obtain the invented motor shown in Fig. 1.

Positioning the radial anisotropic segment ferrite magnet which is equivalent in the magnetic properties as in the above stated radial anisotropic cylinder shape ferrite magnet, and the dimension such as the outside diameter, inside diameter, and the height with the angle θ 135° as shown in Fig. 9 the usual motor was made and compared. This invented motor, in comparison with the conventional motor, reduced the cogging noise by about 60 - 70%, and the increase total magnetic flux resulted in the improvement of 10 - 15% torque revolution.

### Industrial Applicability

This invention, as it is obvious from the examples mentioned above, enables the manufacture of high performance radial anisotropic cylinder shaped ferrite magnets, which hitherto could not be manufactured due to cracking in sintering. Also, for the radial anisotropic cylinder shaped ferrite magnet according to this invention, as compared with using the usual ferrite compositions, the cracking rate remarkably decreases while the magnet mechanical strength improves.

This invented motor, as it is obvious from the examples mentioned above, by positioning the high performance radial anisotropic cylinder shaped ferrite magnet which could not be produced due to cracking, in comparison with the high performance conventional cylinder shaped ferrite magnets which were assembled from segment magnets, its magnet assembly is simplified and can achieve better efficiency in the motor assembly.

Furthermore, it practically possesses the same magnetic field distribution as a uniform radial anisotropic cylinder shaped ferrite magnet, the cogging generation can be lowered and the noise due to cogging can be lowered. Furthermore, in comparison with segment magnets, since the total magnetic flux generated increased, if the same power output is desired minaturization can be accomplished.

## Claims

1. A radial anisotropic magnet having a ferrite composition which includes Sr and/or Ba characterized in that it has a final shape which is near-cylindrical, being a hollow cylinder whose wall is interrupted by a narrow slit which is closed or nearly closed but which yet extends open in one or both of the radial and axial directions, this near-cylinder being derived from a C-shaped powder molding which is molded and sintered, the resultant sintered C-shaped body then being re-formed into a near cylinder with the mouth of the C being partially closed to form the narrow slit.

2. The magnet of claim 1, in which the slit extends open in both the radial and axial directions (Fig. 1 & 2).

3. The magnet of claim 1, in which the slit extends open in a direction which is oblique to the axial direction (Fig. 3).

4. The magnet of Claim 1, in which the slit extends open in a direction which is oblique to the radial direction (Fig 4).

5. The magnet of any one of claims 1 to 4 in which the slit (11) is filled by a resin or a magnetic material.

6. The magnet of any one of claims 1 to 5 and whose periphery is wrapped by a thin magnetic plate (12).

7. The magnet according to claim 1, and including a generally cylindrical yoke surrounding and housing said magnet, said yoke (2) having an inwardly directed protrusion (21), and said protrusion being engaged in said slit (11) to locate the magnet in the yoke.

8. A method of making a radial anisotropic magnet as defined in claim 1 and having a ferrite composition which includes Sr and/or Ba and which has a final shape which is near-cylindrical, being a hollow cylinder whose wall is interrupted by a narrow slit which is closed or nearly closed but which yet extends open in one or both of the radial and axial directions,
characterized in that the constitutent powders for forming the magnet are placed in a C-shaped mould, and sintered, the resultant sintered C-shaped body then being re-formed into a near cylinder with the mouth of the C being partially closed to form the said narrow slit.

9. A magnet according to any one of claims 1 to 7, or when produced by the method defined in claim 8, when employed as a stator or a rotor of an electric motor.

10. An electric motor when equipped with a magnet according to any one of claims 1 to 7, or when produced by the method defined in claim 8.

## Patentansprüche

1. Radial anisotroper Magnet aus einer Sr und/oder Ba enthaltenden Ferrit-Zusammensetzung, dadurch gekennzeichnet, daß er eine nahezu zylindrische Endgestalt aufweist, die als Hohlzylinder ausgebildet ist, dessen Wand durch einen engen Schlitz unterbrochen ist, der geschlossen oder nahezu geschlossen ist, sich aber dennoch offen in der radialen und/oder axialen Richtung erstreckt, wobei dieser Nahezu-Zylinder aus einem C-förmigen Pulverpreßteil abgeleitet ist, das geformt und gesintert ist, wobei der sich ergebende gesinterte C-förmige Körper dann in einen Nahezu-Zylinder umgeformt wird, bei dem die Öffnung des C zur Bildung des engen Schlitzes teilweise verschlossen ist.

2. Magnet nach Anspruch 1, bei welchem sich der Schlitz offen sowohl in der radialen als auch der axialen Richtung erstreckt (Fig. 1 & 2).

3. Magnet nach Anspruch 1, bei welchem sich der Schlitz offen in einer Richtung erstreckt, die schräg zur axialen Richtung verläuft (Fig.3).

4. Magnet nach Anspruch 1, bei welchem sich der Schlitz offen in einer Richtung erstreckt, die schräg zur radialen Richtung verläuft (Fig. 4).

5. Magnet nach einem der Ansprüche 1 bis 4, bei welchem der Schlitz (11) mit einem Harz oder einem magnetischen Material ausgefüllt ist.

6. Magnet nach einem der Ansprüche 1 bis 5, bei welchem die Peripherie des Magneten von einer dünnen magnetischen Platte (13) umhüllt ist.

7. Magnet nach Anspruch 1, der ein im großen und ganzen zylindrisches Joch aufweist, das den besagten Magneten umgibt und in dem er untergebracht ist, wobei das besagte Joch (2) einen nach innen gerichteten Vorsprung (21) besitzt, und der besagte Vorsprung zur Festlegung des Magneten im Joch in den besagten Schlitz (11) eingreift.

8. Verfahren zur Herstellung eines radial anisotropen Magneten, wie er in Anspruch 1 definiert ist, der aus einer Sr und/oder Ba enthaltenden Ferrit-Zusammensetzung besteht und eine nahezu zylindrische Endgestalt aufweist, die als Hohlzylinder ausgebildet ist, dessen Wand durch einen engen Schlitz unterbrochen ist, der geschlossen oder nahezu geschlossen ist, sich aber dennoch offen in der radialen und/oder axialen Richtung erstreckt, dadurch gekennzeichnet, daß die Pulvermaterialien zur Bildung des Magnets in eine C-förmige Preßform eingebracht und gesintert werden und der sich ergebende gesinterte C-förmige Körper dann in einen Nahezu-Zylinder umgeformt wird, indem die Öffnung des C zur Bildung des engen Schlitzes teilweise verschlossen wird.

9. Magnet nach einem der Ansprüche 1 bis 7 oder der nach dem in Anspruch 8 definierten Verfahren hergestellt ist, in seiner Verwendung als Stator oder Rotor eines Elektromotors.

10. Elektromotor der mit einem Magneten ausgerüstet ist, der einem der Ansprüche 1 bis 7 entspricht oder nach dem in Anspruch 8 definierten Verfahren hergestellt ist.

## Revendications

1. Aimant anisotrope radial présentant une composition à base de ferrite qui contient du Sr (Strontium) et/ou du Ba (Baryum), caractérisé en ce qu'il présente une forme finale qui est sensiblement cylindrique, constituée par un cylindre creux dont la paroi est interrompue par une fente étroite qui est fermée ou presque fermée mais qui s'étend ouverte aussi suivant un ou les deux sens axial et radial, cette forme sensiblement cylindrique étant issue d'un moulage de poudre en forme de C qui est moulé et fritté, le corps en forme de C fritté résultant étant ensuite remis en forme sensiblement cylindrique, l'ouverture du C étant partiellement fermée pour former une fente étroite.

2. Aimant selon la revendication 1, dans laquelle la fente s'étend ouverte à la fois dans les sens radial et axial (figure 1 et 2).

3. Aimant selon la revendication 1, dans lequel la fente s'étend ouverte dans un sens qui est incliné par rapport au sens axial (figure 3).

4. Aimant selon la revendication 1, dans lequel la fente s'étend ouverte dans un sens qui est incliné par rapport au sens radial (figure 4).

5. Aimant selon l'une des revendications 1 à 4, dans lequel la fente (11) est remplie par une résine ou un matériau magnétique (12).

6. Aimant selon l'une des revendications 1 à 5, et dont la périphérie est entourée par une plaque magnétique mince (12).

7. Aimant selon la revendication 1, et comprenant une culasse globalement cylindrique entourant et contenant ledit aimant, ladite culasse (2) comportant une partie en saillie orientée vers l'intérieur (21), et ladite partie en saillie entrant dans ladite fente (11) afin de positionner l'aimant dans la culasse.

8. Procédé de fabrication d'un aimant anisotrope radial défini selon la revendication 1 et présentant une composition à base de ferrite qui contient du Sr et/ou du Ba et qui présente une forme finale qui est sensiblement cylindrique, constituée par un cylindre creux dont la paroi est interrompue par une fente étroite qui est fermée ou sensiblement fermée mais qui s'étend ouverte aussi dans un ou les deux sens radial et axial, caractérisé en ce que les constituants pulvérulents destinés à la formation de l'aimant sont placés dans un moule en forme de C et frittés, le corps en forme C fritté résultant étant remis en forme sensiblement cylindrique, l'ouverture du C étant partiellement fermée afin de former ladite fente étroite.

9. Aimant selon l'une des revendications 1 à 7, ou produit suivant le procédé selon la revendication 8, utilisé comme stator ou rotor d'un moteur électrique.

10. Moteur électrique équipé d'un aimant selon l'une quelconque des revendications 1 à 7, ou produit suivant le procédé défini par la revendication 8.
